# EUROPEAN PATENT SPECIFICATION

(11) **EP 3 831 781 B1**
(45) Date of publication and mention of the grant of the patent: **10.01.2024**
(21) Application number: 20211004.5
(22) Date of filing: 01.12.2020
(51) Int. Cl.: C02F 3/00

(54) **PROCESS FOR TREATING WASTEWATER**
VERFAHREN ZUR ABWASSERBEHANDLUNG
PROCÉDÉ POUR LE TRAITEMENT DE L'EAU USÉE

(30) Priority: 02.12.2019 IT 201900022674
(43) Date of publication of application: 09.06.2021
(73) Proprietor: TM.E. S.p.A. TERMOMECCANICA ECOLOGIA, 20129 Milano (IT)
(72) Inventor: MODENESE, Sergio, 19032 Lerici (SP) (IT)
(74) Representative: Torredimare, Luca

(56) References cited:
- CN-A- 1 778 714
- CN-A- 107 664 682
- DE-A1- 19 827 877
- US-A- 5 589 068
- US-A1- 2014 052 422
- US-B1- 7 153 429

## Description

### Technical field

The present invention relates to a process for treating wastewater or impure water.

### Background art

The systems known in the art for automatically controlling wastewater processing plants are based on real-time technologies for modulating the operation of the system and adjusting the purification process. One of the most common reference parameters is the dissolved oxygen measured in the biological reactor, which is used for keeping viable and active the biological sludge effecting the purification. According to the prior art, the operations necessary for adjusting and optimizing the process carried out in the purification plant are assisted with a number of laboratory chemical-physical and biological analyses. Laboratory activities require hours and sometimes even days, thus causing the process to be poorly reactive to variations in the plant's load conditions, *de facto* compromising the potentialities of automatic control systems operating in real time. Therefore, due to practical limitations in the control over the water purification processes, in particular the biological ones, the efficiency of treatment plants depends on, and is limited by, process data obtained by means of analyses (e.g.: COD, BOD, sludge concentration), requiring the presence of qualified personnel for executing and interpreting such analyses in order to suggest the most appropriate management operations that will need to be carried out (e.g.: sludge recirculation modifications, sludge extraction, etc.). Control systems also exist which continuously measure the amount of ammonium in the water to be purified. Some relevant documents are DE 198 27 877 A1, US 2014/052422 A1, US 7 153 429 B1, US 5 589 068 A, CN 1 778 714 A, CN 107 664 682 A.

Therefore, the known control systems of purification plants are poorly efficient, in that energy consumption or treatment effectiveness are not always optimal and are ill-suited to continual and/or sudden variations in the conditions of the water to be purified.

### Summary of the invention

It is one object of the present invention to provide a process capable of overcoming this and other drawbacks of the prior art while at the same time being simple and economical to carry out.

The present invention is described in the appended claims. Independent method claim 1, computer program claim 6 and system claim 7 comprise the essential features of the invention. Further, preferred embodiments are described in dependent claims 2-5.

### Brief description of the drawings

Further features and advantages of the present invention will become apparent in light of the following detailed description, provided merely as a non-limiting example and referring to the annexed drawings, wherein:

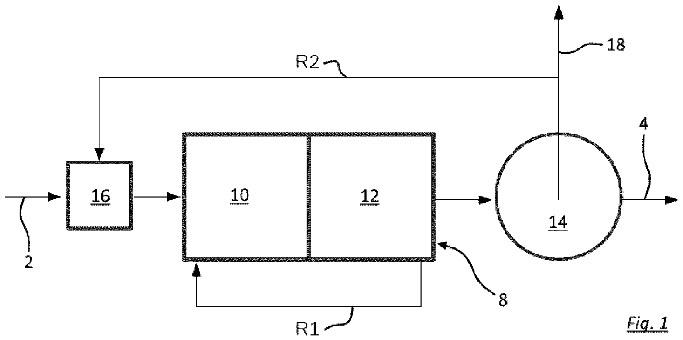

- Figure 1 is a diagram of a purification plant according to a particular embodiment of the present invention.

### Detailed description of the invention

With reference to the annexed drawings, the following will describe a process for treating wastewater and/or impure water, which comprises the following steps:
- analyzing at least one first parameter of a water flow 2 entering a purification plant,
- as a function of said at least one first parameter detected in inflowing water 2, estimating at least one second parameter of a water flow 4 exiting the purification plant,
- analyzing at least one second parameter of water flow 4 exiting the purification plant,
- comparing the estimated values with the values detected in outflowing water 4,
- based on such comparison, adjusting the modalities of treatment or purification of the water in the purification plant,
- treating inflowing water 2 in the purification plant.

In this manner, the estimated values of the second parameters are not fixed, but may change as a function of the first parameters detected at the plant's entrance. This aspect offers the advantage that the system is more flexible and capable of adapt itself to temporary conditions in which there may be anomalous concentrations of some polluting substances in the inflowing water. Therefore, the present invention has an adaptive/predictive behaviour. In fact, if the second parameters (i.e. those of outflowing water 4) were fixed thresholds, anomalies or increased power or chemical consumption might occur when the limit values of such second parameters are exceeded only temporarily, although the values are compliant with the predefined requisites over a longer time period (e.g. 24 hours). In other words, by exploiting the inertia due to the hydraulic retention of the system, the latter can adapt its own configuration (e.g. by adjusting recirculations, oxygenation, etc.) to anticipate and maximize the efficiency of the plant, in particular the efficiency of a biological reactor 8, on the basis of the input loads. In particular, much energy can be saved when operating the plant, in that the variability of the estimated second parameters of outflowing water 4 permits the adoption of a higher threshold in a few transient critical conditions, without necessarily using the plant's maximum purification capacity, which would otherwise imply a high power consumption. In other words, the invention makes it possible to tolerate temporary critical conditions of inflowing water 2, thereby saving energy.

The plant for purifying and/or treating wastewater or impure water may be *per se* known. For example, such plant may comprise one or more purification stages or devices, which may be configured for carrying out a physical, chemical or biological purification, or a combination thereof. As it is known, the water to be purified includes a plurality of substances that do not permit it to be immediately emitted into the environment. Such substances include, for example, nitrates, ammonia or other chemical and biological substances.

According to the invention, the at least one first parameter and the at least one second parameter include nitrogen concentration. According to the invention, a plurality of first parameters are taken into account. In other words, the process comprises the steps of measuring a plurality of first and second parameters, and of simulating a plurality of second parameters. The parameters are physical or chemical parameters of the water.

In the preferred embodiment, the first parameters include: water flow rate, nitrogen concentration; and the second parameters include nitrogen concentration. In general terms, in the present invention the detection of the nitrogen concentration includes the detection of the concentration of molecules or ions comprising nitrogen. In particular, the detection of the nitrogen concentration includes the detection of the concentration of NH₄⁺ ammonium and the concentration of NO₃⁻ nitrate. Therefore, the purification plant may comprise sensors for detecting such parameters. In the preferred embodiments, the process takes into account a plurality of first parameters and potentially a plurality of second parameters.

For example, the plant includes a control system (e.g. a control unit, a PLC, etc.) configured for detecting, through suitable sensors, the first and second parameters, simulating the second parameters, making a comparison between the simulated and detected second parameters, and controlling the purification plant to adjust the modalities of treatment of the water.

For example, the step of comparing the estimated second parameters with the detected ones is followed by a step of adjusting the modalities of treatment of the water in the purification plant, or by a step of keeping such modalities of treatment of the water unchanged. This choice is made on the basis of logics that are, or can be, predefined by a user. For example, if the difference between the estimated second parameters and the detected ones remains within a given threshold, the modalities of treatment of the water will not be changed. On the contrary, if the difference exceeds such threshold, then the modalities of treatment of the water will be changed.

By way of example, the modalities of treatment of the water that can be adjusted or modified include one or more of the following: oxygenation, biological sludge recirculation, biological sludge recirculation. According to the invention, the purification plant comprises a biological reactor 8. The adjustment of the modalities of treatment of the water involves at least, without being limited to, the activities of biological reactor 8. More in general, the adjustment of the modalities of treatment of the water involves one or more of: physical, chemical or biological treatments of the water.

The invention envisages a step of measuring the temperature of biological reactor 8, and such temperature is taken into account in the estimation of the at least one second parameter. In particular, the temperature is that of the water being treated in biological reactor 8. The second parameters are thus estimated also as a function of the temperature of biological reactor 8, in addition to the first parameters of inflowing water 2. Therefore, the plant comprises sensors for measuring the temperature in biological reactor 8. Inflowing water 2 and outflowing water 4 are upstream and downstream, respectively, of biological reactor 8.

For example, the following parameters are detected: temperature of biological reactor 8, flow rate of water 2 entering the purification plant, and nitrate and ammonium concentrations in such inflowing water 2. Based on such parameters, the nitrate and ammonium concentrations in water 4 exiting the plant are estimated; then such estimated concentration is compared with the nitrate and ammonium concentrations actually detected in outflowing water 4 and, based on such comparison, the modalities of purification of the water in the plant are adjusted accordingly.

According to a particular embodiment, the step of estimating the at least one second parameter comprises the steps of:
- providing a theoretical correspondence matrix, wherein predetermined values of the at least one second parameter correspond to predetermined values of the at least one first parameter, and possibly of the temperature of biological reactor 8,
- after detecting the at least one first parameter in inflowing water 2, and possibly the temperature of biological reactor 8, obtaining the estimated value of the at least one second parameter on the basis of the theoretical correspondence matrix.

In other words, the user first creates a sort of matrix or table in which values of the simulated second parameters correspond to predetermined values (or ranges of values) of one or more first parameters, and possibly of the temperature of the biological reactor; then, based on the detected value of the at least one first parameter, and possibly of the temperature of biological reactor 8, the value of the at least one second parameter is estimated, which will be compared with the one actually measured in water 4 exiting the plant. Thus, the simulation of the second parameters is quick and simple, not requiring a particularly powerful computer. Therefore, the control unit does not execute any complex algorithm based on mathematical formulae, but verifies that there is correspondence between the first and second parameters, wherein such correspondence was determined *a priori* on the basis of user-defined design criteria (e.g. by utilizing statistical analyses made previously). Optionally, it is possible to modify the predetermined correspondence between the values of the at least one first parameter, and also of the temperature of biological reactor 8, and the values of the at least one second parameter; for example, the user can interact, via a suitable interface, with the control unit that manages the plant.

According to one possible embodiment, the process comprises a step of making an interpolation in order to estimate the at least one simulated second parameter on the basis of the theoretical correspondence matrix. For example, if the value of a first parameter is not equal to a predetermined value, but falls between two predetermined values of such first parameter, then the simulated value of the second parameter will be an interpolation among a set of values of the second parameter corresponding to a set of predetermined values of the first parameter. Merely as a non-limiting example useful for a better understanding, the control unit stores the following values of the nitrate concentration in inflowing water 2: 0.1% and 0.2%; such values correspond to the following simulated values of the nitrate concentration in outflowing water 4: 0.01% and 0.02%. The nitrate concentration detected in inflowing water 2 is 0.15%; a simulated nitrate concentration in the outflowing water 4 of 0.015% is thus obtained by interpolation. At this point, such simulated value is compared with the nitrate concentration detected in outflowing water 4.

In addition or as an alternative to interpolation, it is possible to approximate the values of the at least one first parameter detected in inflowing water 2 to a predetermined value of such parameter; based on such approximate value, the value of the at least one second parameter is simulated on the basis of the theoretical correspondence matrix. Subsequently, a comparison is made with the second parameter actually measured in outflowing water 4 and, if necessary, the modalities of purification in the plant are modified accordingly.

According to the invention, the simulation of the second parameters is carried out by means of an artificial neural network, e.g. through a control system or unit configured or programmed for operating like a neural network. This aspect makes the processing even quicker and simpler, particularly in comparison with traditional algorithms.

The calculation of the output values based on a neural network permits breaking up the complex mathematical functions that describe numerous biological processes into a series of small, simple and interconnected calculation units (referred to as "artificial neurons"), which, based on environmental factors (i.e. the input data) produce a result that reflects the general behaviour of the system. In order to operate at best, a neural network is normally "trained", i.e. it iteratively executes many simulations (e.g. 100,000 to 1,000,000 simulations) that allow it to calibrate its artificial neurons to the phenomenon that needs to be reproduced. It can afterwards be implanted into any microcontroller and operate autonomously. According to a particular embodiment, therefore, there is a step of having the neural network execute a plurality of iterative simulations. The process of the invention is then executed. It is thus possible to reproduce the laws that govern a complex natural system through a series of extremely simple calculations that can be made by elementary hardware.

According to the invention, the detections and/or the adjustments of the modalities of purification are made in real time, e.g. continuously, or at predetermined intervals (e.g., every hour, every minute, etc.). The detections and/or the adjustments may also occur with different frequencies.

With particular reference to the example of Fig. 1, the plant comprises a biological reactor 8, in which denitrification and nitrification processes take place. Such plant is based on a scheme also known as "nitro-denitro". In the example shown herein there are one denitrification reactor 10 and one nitrification reactor 12. The water that needs to be purified flows through such reactors 10, 12 to be treated by two different processes (denitrification in reactor 10 and nitrification in reactor 12). In particular, the water to be purified flows into denitrification reactor 10 first, and then into nitrification reactor 12. The general operation of reactors 10 and 12 is *per se* known. Therefore, the plant is adapted to at least remove or significantly reduce the amount of nitrogen, in particular nitrate and/or ammonia, from the water. The plant conveniently includes a separator 14, which in this example is located downstream of biological reactor 8. After permanence in separator 14, the water exits the plant, and in such outflowing water 4 the at least one second parameter is measured.

According to one possible variant, there is a step of receiving a command from a user that establishes the value of the at least one simulated second parameter, which is compared with the measured one. Therefore, the user can selectively prevent the at least one simulated second parameter from changing, i.e. the user can disable the predictive character of such parameter. The user can then re-enable the predictive character of such parameter to restore the normal operation of the process. For example, the user can interact with the control system to set and, respectively, unset the "fixed" value of the at least one simulated second parameter.

According to one possible embodiment, the user can interact with the control system to set and modify the logic of execution of the process, e.g. as concerns the step of estimating the second parameter. For example, it is possible to set the process for increasing the energy saved by the plant, or for reducing the amount of pollutants in outflowing water 4. Therefore, a step is envisaged for changing the criteria according to which the process must operate, e.g. by modifying the criteria for the estimation of the second parameter.

In Fig. 1 R1 and R2 designate two recirculation lines for the biological sludge. A first recirculation of the biological sludge takes place in biological reactor 8, in particular between denitrification reactor 10 and nitrification reactor 12. The figure shows a first recirculation line R1 for bringing at least a part of the biological sludge (possibly mixed with water) between reactors 10, 12, in particular from nitrification reactor 12 to denitrification reactor 10.

In the example, the plant includes a recirculation sump 16 whereat inflowing water 2 arrives. The water is intended to flow from recirculation sump 16 to biological reactor 8, and then to separator 14. There is a second recirculation line R2 for bringing a part of the biological sludge (possibly mixed with water) from separator 14 to recirculation sump 16. The process envisages that the extent of such recirculation can be adjusted. Conveniently, separator 14 has an overflow line 18, through which the excess sludge produced during the process can be eliminated. In particular, overflow line 18 may be connected to the second recirculation line R2.

According to the invention, the adjustment of the modalities of treatment of the water comprises the adjustment of the activities of biological reactor 8, including one or more of: oxygenation, biological sludge amount, biological sludge recirculation. In order to generate the oxygenation it is possible, for example, to supply air or oxygen.

In accordance with a particular embodiment of the invention, the process follows the following logics:
if the NH₄⁺ ammonium concentration detected in outflowing water 4 exceeds the simulated NH₄⁺ammonium concentration, increasing the oxygenation in biological reactor 8; otherwise, decreasing said oxygenation;
if the NO₃⁻nitrate concentration detected in outflowing water 4 exceeds the simulated NO₃⁻nitrate concentration, increasing biological sludge recirculation R1, R2; otherwise, decreasing said recirculation.

As aforesaid, according to a particular process, if the difference between the at least one simulated second parameter and the at least one detected second parameter is less than a predetermined quantity (e.g. 1%), then the modalities of treatment of the water in the plant will not be modified. For example, with reference to the above logic, if the NH₄⁺ ammonium concentration detected in outflowing water 4 differs by more than 1% from the simulated NH₄⁺ ammonium concentration, adjusting the oxygenation in biological reactor 8; otherwise, keeping such oxygenation unchanged. Likewise, if the NO₃⁻ nitrate concentration detected in outflowing water 4 differs by more than 1% from the simulated NO₃⁻ nitrate concentration, adjusting the biological sludge recirculation; otherwise, keeping such recirculation unchanged. The presence of a tolerance threshold between actual and simulated values makes it possible to avoid the necessity of making changes to the purification cycle too often, while still keeping the process effective. Therefore, the comparison between simulated and detected second parameters may comprise taking into account such threshold.

The invention also concerns a computer program containing instructions for the execution of a process according to any embodiment of the invention. The program is adapted to work as an artificial neural network.

The invention also concerns a purification plant configured for implementing a process according to any embodiment of the invention. The plant may advantageously comprise the above-described structural and functional features, which will not be repeated below for brevity's sake.

The process of the invention is also applicable to an existing plant. For example, one or more sensors may be installed in the existing plant for detecting the at least one first parameter, the at least one second parameter, or the temperature in biological reactor 8, should the plant lack such sensors. It is also possible to re-program the existing control unit of the plant for executing the process of the invention, or to install an additional control unit or system (e.g. the neural network) to the existing control unit (e.g. a PLC) of the plant in order to operate in accordance with the process. It is therefore also possible to improve the efficiency of existing plants.

Therefore, as aforesaid, the invention offers a number of advantages including: purification process optimization, power consumption minimization, capability of the system to pre-adapt itself to load variations, thus overcoming the drawbacks of a simple and rigid real-time analysis. In fact, the invention makes it possible to adapt the treatment to the variable conditions of the incoming wastewater due to seasonality, climatic variations and day/night alternation. Moreover, the invention advantageously provides automatic adjustment of the water treatment in order to maximize its efficiency without requiring any analyses needing human intervention, which would take time and prevent an instantaneous adjustment of the purification process.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Process for treating wastewater, comprising the following steps:
- analyzing first parameters of a water flow (2) entering a purification plant, wherein the first parameters are: water flow rate, and nitrogen concentration,
- measuring the temperature of a biological reactor (8) of the purification plant,
- as a function of only said first parameters detected in the inflowing water (2) and of only said measured temperature of the biological reactor (8), estimating a nitrogen concentration of a water flow (4) exiting the purification plant, by means of a trained artificial neural network, wherein the inflowing water (2) and the outflowing water (4) are upstream and downstream, respectively, of the biological reactor (8),
- analyzing a nitrogen concentration of the water flow (4) exiting the purification plant,
- comparing the estimated values of nitrogen concentration with the values of nitrogen concentration detected in the outflowing water (4),
- based on such comparison, adjusting the modalities of treatment of the water in the purification plant, which comprises adjusting, in the biological reactor (8), one or more of: oxygenation, biological sludge amount, biological sludge recirculation,
- treating the inflowing water (2) in the purification plant;
wherein the detections and/or the adjustments of the modalities of purification are made in real time.

2. Process according to claim 1, wherein the first parameters include: water flow rate, ammonium concentration, nitrate concentration; and the second parameters include: ammonium concentration, nitrate concentration.

3. Process according to claim 2, comprising the following steps:
if the ammonium concentration detected in the outflowing water (4) exceeds the simulated ammonium concentration, increasing the oxygenation in a biological reactor (8) of the purification plant; otherwise, decreasing said oxygenation;
if the nitrate concentration detected in the outflowing water (4) exceeds the simulated nitrate concentration, increasing the biological sludge recirculation (R1, R2); otherwise, decreasing said recirculation.

4. Process according to any one of the preceding claims, wherein the step of estimating the at least one second parameter comprises the steps of:
• providing a theoretical correspondence matrix, wherein predetermined values of the at least one second parameter correspond to predetermined values of the first parameters and of the temperature of the biological reactor (8) of the purification plant,
• after detecting the first parameters in the inflowing water (2), and the temperature of the biological reactor (8), obtaining the estimated value of the at least one second parameter on the basis of the theoretical correspondence matrix.

5. Process according to any one of the preceding claims, wherein, if the difference between the at least one simulated second parameter and the at least one detected second parameter is smaller than a predetermined quantity, the modalities of treatment of the water in the purification plant will not be modified.

6. Computer program containing instructions for the execution of a process according to any one of the preceding claims.

7. Wastewater purification plant configured for operating in accordance with a process according to any one of claims 1 to 5.

## Patentansprüche

1. Verfahren zur Abwasserbehandlung, umfassend die folgenden Schritte:
- Analyse der ersten Parameter eines Wasserflusses (2), der in eine Kläranlage eintritt, wobei die ersten Parameter sind: Wasserdurchflussrate und Stickstoffkonzentration,
- Messung der Temperatur eines biologischen Reaktors (8) der Kläranlage,
- als eine Funktion ausschließlich der genannten ersten Parameter, die in dem einströmenden Wasser (2) detektiert werden, und ausschließlich der gemessenen Temperatur des biologischen Reaktors (8), Abschätzung einer Stickstoffkonzentration eines aus der Kläranlage austretenden Wasserflusses (4), mittels eines trainierten künstlichen neuronalen Netzes, wobei das einströmende Wasser (2) und das ausströmende Wasser (4) stromauf- bzw. stromabwärts des biologischen Reaktors (8) sind,
- Analyse einer Stickstoffkonzentration des aus der Kläranlage austretenden Wasserflusses (4),
- Vergleich der geschätzten Werte der Stickstoffkonzentration mit den im ausströmenden Wasser (4) festgestellten Werten der Stickstoffkonzentration,
- basierend auf einem solchen Vergleich, Anpassung der Modalitäten der Wasserbehandlung in der Kläranlage, welche die Anpassung eines oder mehrerer der folgenden Elemente im biologischen Reaktor (8) aufweist: Oxygenierung, biologische Schlammmenge, biologische Schlammrückführung,
- die Behandlung des einströmenden Wassers (2) in der Kläranlage;
wobei die Erkennungen und/oder die Anpassungen der Reinigungsmodalitäten in Echtzeit erfolgen.

2. Verfahren nach Anspruch 1, wobei die ersten Parameter aufweisen:
Wasserdurchflussrate, Ammoniumkonzentration, Nitratkonzentration; und die zweiten Parameter aufweisen:
Ammoniumkonzentration, Nitratkonzentration.

3. Verfahren nach Anspruch 2, aufweisend die folgenden Schritte:
wenn die im ausströmenden Wasser (4) festgestellte Ammoniumkonzentration die simulierte Ammoniumkonzentration übersteigt, Erhöhung der Oxygenierung in einem biologischen Reaktor (8) der Kläranlage; andernfalls Verringerung der Oxygenierung;
wenn die im ausströmenden Wasser (4) festgestellte Nitratkonzentration die simulierte Nitratkonzentration übersteigt, Erhöhung der biologischen Schlammrückführung (R1, R2); andernfalls, Verringerung der genannten Rückführung.

4. Verfahren nach einem der vorhergehenden Ansprüche, wobei der Schritt der Abschätzung des mindestens einen zweiten Parameters die folgenden Schritte aufweist:
- Bereitstellung einer theoretischen Korrespondenzmatrix, wobei vorbestimmte Werte des mindestens einen zweiten Parameters vorbestimmten Werten der ersten Parameter und der Temperatur des biologischen Reaktors (8) der Kläranlage entsprechen,
- nach Erkennung der ersten Parameter in dem einströmenden Wasser (2) und der Temperatur des biologischen Reaktors (8), Ermittlung des geschätzten Wertes des mindestens einen zweiten Parameters auf der Grundlage der theoretischen Korrespondenzmatrix.

5. Verfahren nach einem der vorhergehenden Ansprüche, wobei, wenn die Differenz zwischen dem mindestens einen simulierten zweiten Parameter und dem mindestens einen erkannten zweiten Parameter kleiner als eine vorbestimmte Größe ist, die Modalitäten der Wasserbehandlung in der Kläranlage nicht verändert werden.

6. Computerprogramm, das Anweisungen zur Ausführung eines Verfahrens nach einem der vorhergehenden Ansprüche aufweist.

7. Abwasser-Kläranlage, die für den Betrieb gemäß einem Verfahren nach einem der Ansprüche 1 bis 5 konfiguriert ist.

## Revendications

1. Procédé de traitement d'eaux usées, comprenant les étapes suivantes consistant à :
- analyser des premiers paramètres d'un flux d'eau (2) entrant dans une station d'épuration, dans lequel les premiers paramètres sont : le débit d'écoulement d'eau et la concentration d'azote,
- mesurer la température d'un réacteur biologique (8) de la station d'épuration,
- en fonction uniquement desdits premiers paramètres détectés dans l'eau entrante (2) et uniquement de ladite température mesurée du réacteur biologique (8), estimer une concentration d'azote d'un flux d'eau (4) sortant de la station d'épuration, au moyen d'un réseau neuronal artificiel entraîné, dans lequel l'eau entrante (2) et l'eau sortante (4) sont respectivement en amont et en aval du réacteur biologique (8),
- analyser une concentration d'azote du flux d'eau (4) sortant de la station d'épuration,
- comparer les valeurs estimées de concentration d'azote avec les valeurs de concentration en azote détectées dans l'eau de sortie (4),
- sur la base de cette comparaison, ajuster les modalités de traitement de l'eau dans la station d'épuration, ce qui consiste à ajuster, dans le réacteur biologique (8), un ou plusieurs parmi : l'oxygénation, la quantité de boues biologiques, la remise en circulation des boues biologiques,
- traiter l'eau entrante (2) dans la station d'épuration ;
dans lequel les détections et/ou les ajustements des modalités d'épuration surviennent en temps réel.

2. Procédé selon la revendication 1, dans lequel les premiers paramètres incluent : le débit d'écoulement d'eau, la concentration d'ammonium, la concentration de nitrate ; et les seconds paramètres incluent : la concentration d'ammonium, la concentration de nitrate.

3. Procédé selon la revendication 2, comprenant les étapes suivantes consistant à :
si la concentration d'ammonium détectée dans l'eau de sortie (4) dépasse la concentration d'ammonium simulée, augmenter l'oxygénation dans un réacteur biologique (8) de la station d'épuration ; sinon, diminuer ladite oxygénation ;
si la concentration de nitrate détectée dans l'eau de sortie (4) dépasse la concentration de nitrate simulée, augmenter la remise en circulation des boues biologiques (R1, R2) ; sinon, diminuer ladite remise en circulation.

4. Procédé selon l'une quelconque des revendications précédentes, dans lequel l'étape d'estimation du au moins un second paramètre comprend les étapes consistant à :
• fournir une matrice de correspondance théorique, dans lequel des valeurs prédéterminées du au moins un second paramètre correspondent à des valeurs prédéterminées des premiers paramètres et de la température du réacteur biologique (8) de la station d'épuration,
• après avoir détecté les premiers paramètres dans l'eau d'entrée (2), et la température du réacteur biologique (8), obtenir la valeur estimée du au moins un second paramètre sur la base de la matrice de correspondance théorique.

5. Procédé selon l'une quelconque des revendications précédentes, dans lequel, si la différence entre le au moins un second paramètre simulé et le au moins un second paramètre détecté est inférieure à une quantité prédéterminée, les modalités de traitement de l'eau dans la station d'épuration ne seront pas modifiées.

6. Programme d'ordinateur contenant des instructions pour l'exécution d'un procédé selon l'une quelconque des revendications précédentes.

7. Installation d'épuration d'eaux usées configurée pour fonctionner conformément à un procédé selon l'une quelconque des revendications 1 à 5.
